(19) Europäisches Patentamt
European Patent Office
Office européen des brevets

(11) Veröffentlichungsnummer: **0 495 363 A1**

(12) # EUROPÄISCHE PATENTANMELDUNG

(21) Anmeldenummer: **92100108.7**

(22) Anmeldetag: **07.01.92**

(51) Int. Cl.[5]: **C08L 77/00**, //(C08L77/00, 35:00)

(30) Priorität: **15.01.91 DE 4100912**

(43) Veröffentlichungstag der Anmeldung: **22.07.92 Patentblatt 92/30**

(84) Benannte Vertragsstaaten: **DE FR GB IT**

(71) Anmelder: **BAYER AG**
**W-5090 Leverkusen 1 Bayerwerk(DE)**

(72) Erfinder: **Heinz, Hans-Detlef, Dr.**
**Breslauer Strasse 31**
**W-4150 Krefeld(DE)**
Erfinder: **Fahnler, Freidrich, Dipl.-Ing.**
**Wimmersweg 60**
**W-4150 Krefeld 1(DE)**
Erfinder: **Schulte, Helmut, Dipl.-Ing.**
**Horstdyk 73 a**
**W-4150 Krefeld(DE)**

(54) **Verfahren zur Herstellung hochmolekularer Polyamide.**

(57) Gegenstand der Erfindung ist ein Verfahren zur Herstellung hochmolekularer Polyamide bzw. zur Herstellung von Polyamidformmassen mit verbesserten Eigenschaften. Gegenstand der Erfindung sind ebenfalls die nach dem erfindungsgemäßen Verfahren hergestellten Polyamide. Gegenstand der Erfindung ist weiterhin die Verwendung der erfindungsgemäß hergestellten Polyamide zur Herstellung geformter Körper. Auch die geformten Körper aus den erfindungsgemäß hergestellten Polyamiden sind Gegenstand der Erfindung. Das Verfahren ist gekennzeichnet durch Schmelzhomogenisierung von aliphatischen Polyamiden mit $\eta_{rel}$ = 2,2-3,6 mit 0,1-10 Gew.-% (25 °C, 1 %ig in m-Kresol) spezieller Copolymerer aus ungesättigten Dicarbonsäuren und ihren Derivaten und bestimmten Olefinen.

EP 0 495 363 A1

Gegenstand der Erfindung ist ein Verfahren zur Herstellung hochmolekularer Polyamide bzw. zur Herstellung von Polyamidformmassen mit verbesserten Eigenschaften. Gegenstand der Erfindung sind ebenfalls die nach dem erfindungsgemäßen Verfahren hergestellten Polyamide. Gegenstand der Erfindung ist weiterhin die Verwendung der erfindungsgemäß hergestellten Polyamide zur Herstellung geformter Körper. Auch die geformten Körper aus den erfindungsgemäß hergestellten Polyamiden sind Gegenstand der Erfindung. Das Verfahren ist gekennzeichnet durch Schmelzhomogenisierung von aliphatischen Polyamiden mit $\eta_{rel}$ = 2,2-3,6 mit 0,1-10 Gew.-% (25°C; 1 %ig in m-Kresol) spezieller Copolymerer aus ungesättigten Dicarbonsäuren und ihren Derivaten und bestimmten Olefinen.

Polyamide sind eine seit vielen Jahren für eine Vielzahl praktischer Anwendungen bewährte Klasse von Polymeren, die nach verschiedenen Verfahren hergestellt, die aus sehr unterschiedlichen Bausteinen synthetisiert und die im speziellen Anwendungsfall, allein oder auch in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden können.

Zur Herstellung der Polyamide sind eine Vielzahl von Verfahrensweisen bekannt geworden, wobei, je nach gewünschtem Endprodukt, unterschiedliche Monomerbausteine zur Bestimmung der Matrix-Natur, verschiedene Kettenregler zur Einstellung eines angestrebten mittleren Molekulargewichts oder auch Monomere mit "reaktiven" Gruppen für später beabsichtigte Nachbehandlungen (z.B. Aminogruppen oder Sulfonatgruppen zur besseren Anfärbbarkeit von Fasern mit sauren bzw. basischen Farbstoffen) eingesetzt werden.

Die technisch relevanten Verfahren zur Herstellung von Polyamiden laufen ausnahmslos über die Polykondensation (in diesem Rahmen wird auch die hydrolytische Polymerisation von Lactamen als Polykondensation verstanden) in der Schmelze. Diese Verfahren liefern aber wegen der mit steigendem Molekulargewicht sehr rasch wachsenden Schmelzviskosität nur relativ niedermolekulare Produkte, da eine zu hohe Schmelzviskosität zu verschiedenen Problemen führt.

So wird die Temperaturführung sowie die Entfernung des Reaktionswassers immer schwieriger, und die lange Reaktionszeit bei den notwendigen hohen Temperaturen führt in verstärktem Maß zu Nebenreaktionen und Gelteilchenbildung, die die Qualität des Endproduktes drastisch verschlechtern können. Auch das Abspinnen wird zunehmend schwieriger bei sehr hohen Schmelzviskositätswerten.

Es besteht daher Bedarf an einem Verfahren, welches in technisch einfach beherrschbarer Weise die Herstellung hochmolekularer, teilchenförmiger PA in geringer Reaktionszeit und unter schonenden Bedingungen erlaubt.

Weiterhin wäre es wünschenswert, Polyamide mit sehr hoher Schmelzviskosität, wie sie z.B. für das Extrusionsblasformen großer Hohlkörper, z.B. KFz-Tanks, benötigt werden, gut und schnell herstellen zu können.

Es sind verschiedene Verfahren bekannt, durch Nachbehandlung von Polyamiden deren Molekulargewicht bei der Verarbeitung zu stabilisieren bzw. zu erhöhen, beispielsweise durch Behandlung mit Epoxiden (EP 0 295 906) und Phosphorverbindungen (EP 0 315 408; WO 90/05163; S.M. Aharoni, W.B. Hammond, J.S. Szobota, D. Masilamani, J. Polym. Sci., Polym. Chem. Ed. 22, 2567-77 (1984)); weiterhin ist bekannt, daß man den Aminendgruppengehalt von Polyamiden durch Reaktion mit Endgruppenverkappern (Säureanhydride, -chloride, Carbonsäureester, Amide, Carbonate, Isocyanate, Carbodiimide) in der Schmelze verringern kann (EP 0 285 692, 0 285 693), wobei angeführt wird, daß diese Endgruppenverkapper eine Tendenz zur Verringerung des Molekulargewichts zeigen. Ungünstig bei Verwendung von Epoxiden und Isocyanaten ist vor allem, daß es sich hierbei i.a. um mehr oder weniger flüchtige, toxikologisch nicht unbedenkliche Verbindungen handelt. Weiterhin führen sie häufig zu verfärbten Produkten (vergl. DD 161 135). Weiterhin ist bekannt, Polyamide eines bestimmten Viskositätsbereichs mit bestimmten alternierenden Copolymeren aus Säureanhydriden und niederen Olefinen sowie gegebenenfalls zusätzlich Ethylen-Vinylalkohol-Copolymeren abzumischen (DD 0 161 135, 0 248 368).

Überraschend wurde nun gefunden, daß man sehr hochmolekulare Polyamide bzw. Polyamidformmassen mit verbesserten mechanischen Eigenschaften dadurch erhalten kann, indem man üblichen Polyamiden geringe Mengen spezieller Olefin-Säureanhydrid-Copolymere zusetzt. Völlig überraschend gelingt es auf diese einfache Weise, Polyamide mit deutlich erhöhten relativen Lösungsviskositäten und/oder verbesserten mechanischen Eigenschaften herzustellen, wobei bestimmte Nachteile des Verfahrens der DD 161 135 überwunden werden. Das neue Verfahren ist vielseitig einsetzbar und einfach durchzuführen.

Gegenstand der Erfindung ist daher ein Verfahren zur Herstellung hochmolekularer Polyamide bzw. von Polyamiden mit verbesserten Eigenschaften, dadurch gekennzeichnet, daß

1. 90-99,9 Gew.-% thermoplastischer, aliphatischer Polyamide mit einer relativen Lösungsviskosität zwischen 2,2 und 3,6 (25°C, 1 %ig in m-Kresol) und

2. 0,1-10 Gew.-% spezieller Copolymerer aus ungesättigten Dicarbonsäuren und/oder ihren Derivaten und bestimmten Olefinen, nämlich

a) statistische Copolymere mit Vinylaromaten der Formel (I),

$$H_2C{=}C(R_1)\text{—}Ar\text{—}(R_2)_x \qquad (I)$$

wobei

$R_1$ Wasserstoff oder einen $C_{1-3}$-Alkylrest, insbesondere Wasserstoff,

$R_2$ Wasserstoff oder $C_{1-5}$-Alkylreste oder Halogen (beispielsweise Chlor), insbesondere Wasserstoff,

Ar einen $C_{6-24}$-Arylrest, insbesondere einen Phenylrest,

x ganze Zahlen im Bereich von 0-3, insbesondere 0,

bedeuten, und

b) alternierende Copolymere mit α-Olefinen der Formel (II),

$$H_2C=CH\text{—}R \qquad (II)$$

wobei

R ein $C_{11-20}$-Rest und insbesondere ein $C_{12-16}$-Rest ist,

und wobei die Copolymeren 2)a) mindestens 3 Gew.-% der ungesättigten Dicarbonsäuren bzw. ihrer Derivate enthalten,

über einen Extruder aufgeschmolzen und homogenisiert werden, wobei die resultierenden Polyamide bevorzugt Molekulargewichte ($\overline{M}_n$) von mehr als 25.000 g $mol^{-1}$ aufweisen sollen.

Gegenstand der Erfindung sind ebenfalls die nach dem erfindungsgemäßen Verfahren hergestellten Polyamide, ihre Verwendung zur Herstellung geformter Körper und die geformten Körper aus den erfindungsgemäß hergestellten Polyamiden.

Gegenstand der Erfindung sind auch Polyamidformmassen mit verbesserten mechanischen Eigenschaften, hergestellt nach dem erfindungsgemäßen Verfahren.

Erfindungsgemäß geeignete Polyamide 1. sind solche, welche thermoplastisch verarbeitbar sind und mindestens 25 Gew.-% aliphatischer Bausteine in der Kette enthalten. Bevorzugt sind PA 6, 66, 46, 69, 610, 11, 12, 1212 und Copolyamide auf Basis PA 6 bzw. 66. Besonders bevorzugt sind PA6, 66 und Copolyamide auf Basis PA 6 bzw. 66. Ganz besonders bevorzugt sind PA 6 und Copolyamide auf Basis PA 6 mit maximal 25 Gew.-% Comonomeren in der Kette.

Erfindungsgemäß geeignet als Ausgangsmaterialien sind Polyamide, insbesondere Polyamid 6, mit $\eta_{rel}$-Werten (gemessen bei 25° C in m-Kresol anhand einer 1 %igen Lösung) zwischen 2,2 und 3,6, wie sie üblicherweise großtechnisch, beispielsweise durch hydrolytische Polymerisation von Caprolactam in VK-Rohren und gegebenenfalls anschließende Festphasennachkondensation erhalten werden können.

Die Polyamide 1. weisen bevorzugt relative Lösungsviskositäten ($\eta_{rel}$: 25° C, 1 %ig in m-Kresol) von 2,4-3,5, besonders bevorzugt 2,6-3,5 und ganz besonders bevorzugt 2,8-3,2 auf.

Bevorzugte Copolymere 2. enthalten insbesondere Maleinsäure bzw. Maleinsäureanhydrid bzw. Maleinsäureimide, beispielsweise Maleinsäure-N-phenylimid, oder Itaconsäure bzw. Itaconsäureanhydrid, in Mengen von mindestens 5 Gew.-%, besonders bevorzugt mindestens 6 Gew.-%. Besonders bevorzugt als ungesättigtes Dicarbonsäuremonomer ist Maleinsäureanhydrid.

Geeignete Comonomere sind beispielsweise 1-Tetradecen, 1-Hexadecen, 1-Octadecen, Styrol und m- bzw. p-Methylstyrol. Bevorzugte Olefine sind 1-Octadecen, 1-Hexadecen und Styrol.

Entsprechende Copolymere sind bekannt bzw. nach bekannten Verfahren herstellbar (s. beispielsweise Encyclopedia of Polymer Science & Engineering, Vol. 9, Wiley Interscience, John Wiley & Sons, New York 1987; Kapitel "Maleic and Fumaric Polymers"). Spezifische Beispiele für geeignete Copolymere 2. sind statistische Styrol-Maleinsäureanhydrid-Copolymere, alternierende 1-Tetradecen-Maleinsäureanhydrid-Copolymere bzw. 1-Hexadecen-Maleinsäureanhydrid-Copolymere bzw. 1-Octadecen-Maleinsäureanhydrid-Copolymere. Besonders bevorzugte Copolymere 2. sind die Copolymeren 2a).

Die Copolymeren 2. können neben den ungesättigten Dicarbonsäuren bzw. ihren Derivaten und den Olefinen der Formeln (I) bzw. (II) noch weitere Monomere enthalten, beispielsweise Acrylsäure- oder Methacrylsäureester (vergl. Encyclopedia of Polymer Science & Engineering, s. o.); diese weiteren Monomeren sind i.a. nur in untergeordneten Mengen anwesend.

Bevorzugte Copolymere 2. sind statistische Copolymere aus Styrol und Maleinsäureanhydrid (MSA) mit MSA-Gehalten zwischen 5 und 25 Gew.-%, insbesondere 6 und 15 Gew.-%, und alternierende Copolymere aus $\alpha$-Olefinen mit 14-20 C-Atomen, beispielsweise 1-Octadecen bzw. 1-Hexadecen bzw. 1-Tetradecen, und Maleinsäureanhydrid; entsprechende Copolymere 2. sind beispielsweise unter den Handelsnamen "Dylark" (statistisches Styrol-Maleinsäureanhydrid-Copolymer; enthält nach "Encyclopedia of Polymer Science & Engineering", s.o., noch geringe Mengen eines dritten Monomeren; ein Produkt der ARCO CHEMICAL COMPANY) und "PA 18" (alternierendes Copolymer aus 1-Octadecen und Maleinsäureanhydrid; ein Produkt der CHEVRON CHEMICAL CORPORATION) kommerziell erhältlich.

Im erfindungsgemäßen Verfahren werden die Polymeren 1. und 2. in der Schmelze miteinander vermischt, beispielsweise in Zweiwellenextrudern. Jedoch ist es auch möglich und bevorzugt, Granulatmischungen in Einwellenextrudern bzw. Spritzgießmaschinen miteinander zu mischen und zu extrudieren, beispielsweise zu Halbzeugen oder zu Fertigteilen. Bevorzugt werden bei letzterer Verfahrensweise die Polymeren 1. und 2. als Granulatmischung eingesetzt, jedoch ist auch eine getrennte Dosierung der Einzelkomponenten möglich. Überraschend ist es auch, daß schon auf Einwellenextrudern homogene Mischungen erhalten werden können.

Im erfindungsgemäßen Verfahren wird die relative Lösungsviskosität und auch die Schmelzviskosität erhöht, während beim Vergleich ohne Copolymer 2. die Viskositäten sich üblicherweise kaum verändern, gegebenenfalls sogar abnehmen. Erfindungsgemäß soll bevorzugt ein $\eta_{rel}$-Anstieg um mindestens 0,3, besonders bevorzugt mindestens 0,5 Einheiten erfolgen. Insbesondere sollen diese Anstiege bei Einsatzmengen an Copolymeren 2. von 1 Gew.-% oder weniger erfolgen. Bevorzugte Polyamide der Erfindung weisen Molekulargewichte ($\overline{M}_n$) von mehr als 25.000 g $mol^{-1}$ auf.

Das erfindungsgemäße Verfahren wird besonders überraschend dadurch, daß niedermolekulare Säureanhydride wie beispielsweise Trimesinsäureanhydrid nicht nur i.a. keine Molekulargewichtserhöhung zeigen, sondern eher sogar die Viskositätswerte verringern.

Das Maß des Viskositätsanstiegs ist i.a. umso größer, je größer die eingesetzte Menge an Copolymer 2. ist. Bevorzugt werden die Copolymeren 2., je nach Gehalt an ungesättigter Dicarbonsäure(derivat), in Mengen von 0,5-8 Gew.-% und besonders bevorzugt zu 0,5-6 Gew.-% eingesetzt. Dabei gelten die höheren Mengen bevorzugt für Copolymere 2. mit geringerem Gehalt an reaktivem Monomer und umgekehrt.

Weiterhin können die bei gegebener Copolymer 2.-Menge erreichten Viskositätswerte von der Verweilzeit der Schmelze im Extruder, beispielsweise einstellbar über die Schneckendrehzahl, abhängen. Auch die Temperatur spielt meist eine Rolle für die Höhe des Viskositätsanstiegs.

Die so erhaltenen Polyamide können, wenn gewollt, anschließend einer Festphasennachkondensation im Bereich von 140-200 °C, immer jedoch mindestens 10 °C unterhalb des Schmelzpunktes des jeweiligen Polyamids 1., bevorzugt unter Verwendung von Stickstoff, für eine Zeit von 0,5-50 Stunden in üblicher Weise unterworfen werden.

In DD 161 135 wird ein Verfahren zur Erhöhung der Viskosität niederviskosen PA 6 unter Verwendung alternierender Copolymerer aus Maleinsäure- bzw. Itaconsäureanhydrid und $C_{2-12}$-$\alpha$-Olefinen offenbart. Es besteht hier die große Gefahr der Vernetzung der Schmelze im Extruder; reproduzierbare Ergebnisse sind kaum zu erhalten. Um noch halbwegs homogene Produkte herzustellen, müssen sehr kleine Mengen an alternierenden Copolymeren zugesetzt werden. Dies bringt große Dosierprobleme mit sich.

Insgesamt ist das Verfahren der DD 161 135 daher von nur geringem praktischen Wert.

Das erfindungsgemäße Verfahren bietet hier entscheidende Vorteile.

Die DD 161 135 gibt keinerlei Hinweis darauf, daß durch erfindungsgemäße Modifizierung die mechanischen Eigenschaften von Polyamiden verbessert werden können.

Es können im Rahmen der Erfindung auch während der Extrusion Zusatzstoffe, beispielsweise Stabilisatoren, Antioxidantien, Farbstoffe, Pigmente, Füll-/Verstärkungsstoffe (Glasfasern, Glaskugeln, Aramidfasern, Kohlenstoffasern, Glaskugeln, mineralische Füllstoffe u.a.m.), Nukleierungsmittel, Gleitmittel, Entformungsmittel, Schlagzähmodifikatoren (mit Ausnahme von Ethylen-(gegebenenfalls mit Metallionen neutralisierte)-Säuremonomer-Copolymeren), Öle u.a.m., wie sie im Stand der Technik beschrieben sind, zugesetzt werden. Sie können aber auch genauso schon vorher in den Polymeren 1. bzw. 2. enthalten sein. Sie können in der Menge von bis zu 150 Gew.-%, bezogen auf den PA-Anteil, anwesend sein. Bevorzugte Polyamide der Erfindung enthalten Füll-/Verstärkungsstoffe und/oder Schlagzähmodifikatoren.

Das erfindungsgemäße Verfahren erlaubt es, in sehr einfacher Weise hochmolekulare Polyamide zu erzeugen bzw. die mechanischen Eigenschaften von Polyamiden zu verbessern. Beispielsweise können

durch den Zusatz der Copolymeren 2. Steifigkeit und Festigkeit oder auch die Zähigkeit erhöht werden. Im Vergleich zu bekannten Verfahren, beispielsweise der EP 0 295 906, werden hier toxikologisch unbedenkliche Substanzen, welche üblicherweise als gut dosierbare Feststoffe vorliegen, eingesetzt.

Bei richtiger Auswahl von Copolymertyp und -menge, Verweilzeit und Temperatur stellen sich nach kurzer Einlaufzeit zeitlich konstante Viskositätswerte ein.

Das erfindungsgemäße Verfahren ist daher eine wesentliche Bereicherung des Standes der Technik.

Die nach dem erfindungsgemäßen Verfahren hergestellten Polyamide werden üblicherweise entweder granuliert oder auch direkt in Anschluß an die Extrusion zu Halbzeugen oder Fertigteilen verarbeitet, beispielsweise Rohren oder Hohlkörpern. Weiterhin können die Copolymeren 2. auch unmittelbar vor einer Spritzgußverarbeitung den Polyamiden 1. zugesetzt werden. Bevorzugte Ausführungsformen der Erfindung bestehen in der Verarbeitung von Granulatmischungen über Extruder direkt zu Halbzeugen oder Fertigteilen ohne vorherige Compoundierung, wobei besonders bevorzugt füll-/verstärkungsstoffhaltige Polyamide 1. eingesetzt werden.

Die nachfolgenden Beispiele mit typischen Einsatzstoffen in typischen Mengen sollen die Erfindung erläutern, ohne sie darauf einzuschränken.

Beispiele

Eingesetzte Copolymere 2):

Copolymer 2).1.: statistisches Styrol-Maleinsäureanhydrid-Copolymer; Vicat B 130 °C; (Dylark 332; ein Produkt der ARCO CHEMICAL COMPANY)

Copolymer 2).2.: statistisches Styrol-Maleinsäureanhydrid-Copolymer; Vicat B 110 °C; (Dylark 232; ein Produkt der ARCO CHEMICAL COMPANY)

Copolymer 2).3.: alternierendes Copolymer aus 1-Octadecen und Maleinsäureanhydrid (PA 18; ein Produkt der CHEVRON CHEMICAL CORPORATION)

Beispiele 1 und 2

Polyamid 6 der relativen Viskosität (25 °C, 1 %ig in m-Kresol) 2,9, welches ein Nukleierungsmittel enthält (DURETHAN B 30 S; ein Produkt der BAYER AG) wurde mit verschiedenen Mengen Copolymer 2).3. trocken vermischt und bei 277-278 °C und einem Durchsatz von 12 kg $h^{-1}$ über einen Doppelwellenextruder (ZSK 30) extrudiert. Der Strang wurde in ein Wasserbad abgesponnen und granuliert. Es resultierte ein homogenes Granulat.

Die $\eta_{rel}$-Werte sowie Schmelzviskositätswerte sind in Tabelle 1 zusammengestellt.

Vergleichsbeispiel 1

In derselben Weise wurde das reine Ausgangspolyamid extrudiert. Die Viskositätsdaten sind ebenfalls in Tabelle 1 enthalten.

Beispiele 3 bis 8

Die nach den Beispielen 1 und 2 hergestellten Granulate wurden bei 170 und 180 °C in der festen Phase nachkondensiert. Relative Lösungs- bzw. Schmelzviskositätswerte sind in Tabelle 2 enthalten.

Vergleichsbeispiele 2 bis 4

In derselben Weise wurde das Polyamid des Vergleichsbeispiels 1 nachkondensiert (Tabelle 2).

Beispiele 9 und 10

In der für die Beispiele 1 bis 2 beschriebenen Weise wurde ein PA 6 ($\eta_{rel} \approx$ 2,9) mit 1 und 2 Gew.-% Copolymer 2).3.bei 260 °C und einem Durchsatz von 24 kg $h^{-1}$ über einen ZSK 53-Doppelwellenextruder extrudiert. Viskositätsdaten sowie einige mechanische Eigenschaften der Compounds sind in Tabelle 3 zusammengestellt.

Vergleichsbeispiel 5

In derselben Weise wurde das PA 6-Granulat ohne Copolymer 2) extrudiert (Daten s. Tabelle 3).

Beispiele 11 bis 13

Ein elastomermodifiziertes PA 6 (DURETHAN BC 303; ein Produkt der BAYER AG) wurde mit verschiedenen Mengen Copolymer 2).3. trocken vermischt und in einer Spritzgießmaschine zu Prüfkörpern verarbeitet. Viskositätsdaten sowie einige mechanische Eigenschaften sind in Tabelle 4 zusammengestellt.

Vergleichsbeispiel 6

In derselben Weise wurde das reine Polyamid der Beispiele 11 bis 13 geprüft (Daten s. Tabelle 4).

Tabelle 1

| Beispiel (Nr.) | Copolymer (Art) | Menge (%) | $\eta_{rel}$ 1) | SV 2) (Pa.s) |
|---|---|---|---|---|
| 1 | 2).3. | 0,5 | 3,16 | 195 |
| 2 | " | 1,0 | 3,78 | 545 |
| Vergl. 1 | " | - | 2,85 | - |

1) 1 %ig in m-Kresol, 20° C

2) Schmelzviskosität bei 250° C, 0,90 $s^{-1}$, 2 min Scherzeit

Tabelle 2

| Beispiel | Copolymer | Menge (%) | $\eta_{rel}$ nach t(h) bei (T°C) | | SV 1) (Pa.s) |
|---|---|---|---|---|---|
| 3 | 2).3. | 0,5 | 3,56 | (7 h / 170°C) | - |
| 4 | " | " | 3,72 | (14 h / 170°C) | - |
| 5 | " | " | 4,03 | (14 h / 180°C) | 1480 |
| 6 | " | 1,0 | 4,47 | (7 h / 170°C) | 1766 |
| 7 | " | " | 4,81 | (14 h / 170°C) | 3116 |
| 8 | " | " | 5,34 | (14 h / 180°C) | 3324 |
| Vergl. 2 | - | - | 3,30 | (7 h / 170°C) | - |
| 3 | - | - | 3,15 | (14 h / 170°C) | - |
| 4 | - | - | 3,49 | (14 h / 180°C) | - |

1) Schmelzviskosität bei 250°C, 0,901 $s^{-1}$, 2 min Scherzeit

Die Scherkurven der Copolymer 2).3. haltigen, nachkondensierten Proben wiesen eine erhöhte Strukturviskosität auf.

Tabelle 3

| Beispiel | Copolymer | Menge (%) | $\eta^{rel}$ | $E_Z$ 1) (MPa) | $\epsilon_R$ 2) (%) | $S_B$ 3) (MPa) | $S_r$ 4) (MPa) |
|---|---|---|---|---|---|---|---|
| 9 | 2).3. | 1 | 3,76 | 2933 | 128,6 | 80,6 | 56,4 |
| 10 | " | 2 | 5,32 | 3069 | 195,4 | 83,6 | 72,0 |
| Vergl. 5 | - | - | 2,83 | 2857 | 41,7 | 78,9 | 55,2 |

1) Zug-E-Modul; DIN 53455, 53457

2) Reißdehnung; s.o.

3) Zugfestigkeit; s.o.

4) Reißfestigkeit; s.o.

Tabelle 4

| Beispiel | Copolymer | Menge (%) | IZOD-$a_K$ ($kJ/m^2$) bei RT 1) | IZOD-$a_K$ ($kJ/m^2$) bei -20° C |
|---|---|---|---|---|
| 11 | 2).3. | 0,5 | 20 | 9,8 |
| 12 | " | 1,0 | 78,8 | 12,8 |
| 13 | " | 2,0 | 39,4 | 14,2 |
| Vgl. 6 | - | - | 18,0 | 10,5 |

1) RT = Raumtemperatur

## Patentansprüche

**1.** Verfahren zur Herstellung hochmolekularer Polyamide unter Verbesserung mechanischer Eigenschaften von Polyamiden, dadurch gekennzeichnet, daß

1. 90-99,9 Gew.-% thermoplastischer, aliphatischer Polyamide mit einer relativen Lösungsviskosität zwischen 2,2 und 3,6 (25° C, 1 %ig in m-Kresol) und

2. 0,1-10 Gew.-% spezieller Copolymerer aus ungesättigten Dicarbonsäuren und/oder ihren Derivaten und bestimmten Olefinen, nämlich

a) statistische Copolymere mit Vinylaromaten der Formel (I) als Olefine

R1
H2C=C
Ar
(R2)x

(I)

wobei

- $R_1$ Wasserstoff oder einen $C_{1-3}$-Alkylrest, insbesondere Wasserstoff,
- $R_2$ Wasserstoff oder $C_{1-5}$-Alkylreste oder Halogen (beispielsweise Chlor), insbesondere Wasserstoff,
- Ar einen $C_{6-24}$-Arylrest, insbesondere einen Phenylrest,
- x ganze Zahlen im Bereich von 0-3, insbesondere 0,

bedeuten, und/oder

b) alternierende Copolymere mit $\alpha$-Olefinen der Formel (II),

$H_2C=CH-R$ (II)

wobei

R ein $C_{11-20}$-Rest und insbesondere ein $C_{12-16}$-Rest ist,

und wobei die Copolymeren 2.a) mindestens 3 Gew.-% der ungesättigten Dicarbonsäuren bzw. ihrer Derivate enthalten,

über einen Extruder aufgeschmolzen und homogenisiert werden, wobei sich eine Festphasennachkondensation anschließen kann, mit der Maßgabe, daß keine Ethylen-(gegebenenfalls neutralisierte)Säuremonomer-Copolymere als polymere Legierungspartner in den resultierenden Polyamiden anwesend sind.

2. Verfahren nach Anspruch 1, dadurch gekennzeichnet, daß als Monomere für die Copolymeren 2. bevorzugt einerseits Maleinsäure bzw. Maleinsäureanhydrid bzw. Maleinsäureimide, beispielsweise Maleinsäure-N-phenylimid, oder Itaconsäure bzw. Itaconsäureanhydrid, und besonders bevorzugt Maleinsäureanhydrid, in Mengen von mindestens 5 Gew.-%, besonders bevorzugt mindestens 6 Gew.-%, und andererseits 1-Octadecen, 1-Hexadecen, 1-Tetradecen, Styrol, m- und p-Methylstyrol bzw. Gemische der beiden, sowie gegebenenfalls noch weitere Vinylmonomere in vergleichsweise untergeordneten Mengen, eingesetzt werden, wobei die Copolymeren 2. in Mengen von 0,5-8 Gew.-% und besonders bevorzugt zu 0,5-6 Gew.-% eingesetzt werden, wobei die höheren Einsatzmengen bevorzugt für Copolymere 2. mit geringerem Gehalt an reaktiven Monomer und umgekehrt gelten.

3. Verfahren nach Ansprüchen 1 und 2, dadurch gekennzeichnet, daß als Copolymere 2. bevorzugt a) statistische Styrol-Maleinsäureanhydrid-Copolymere, die noch weitere Monomere, beispielsweise (Meth)acrylsäureester, in vergleichsweise geringen Mengen enthalten können, sowie b) alternierende Copolymere aus 1-Octadecen bzw. 1-Hexadecen bzw. 1-Tetradecen und Maleinsäureanhydrid eingesetzt werden und daß besonders bevorzugt die Copolymeren a) eingesetzt werden.

4. Verfahren nach Ansprüchen 1 bis 3, dadurch gekennzeichnet, daß als Polyamide 1. PA 6, 66, 46, 69, 610, 11, 12, 1212 und Copolyamide auf Basis PA 6 bzw. 66 bevorzugt und PA 6, 66 und Copolyamide auf Basis PA 6 bzw. 66 besonders bevorzugt sind, wobei die Polyamide 1) bevorzugt relative Lösungsviskositäten ($\eta_{rel}$; 25 °C, 1 %ig in m-Kresol) von 2,4-3,5, besonders bevorzugt 2,6-3,5 und ganz besonders bevorzugt 2,8-3,2 aufweisen.

5. Verfahren nach Anspruch 1, dadurch gekennzeichnet, daß im Anschluß an die Schmelzbehandlung eine Festphasennachkondensation im Bereich von 140-200 °C, jedoch immer mindestens 10 °C unterhalb des Schmelzpunktes des Polyamids 1., in üblicher Weise, bevorzugt unter Verwendung von Stickstoff, für 0,5-50 Stunden folgen kann.

6. Verfahren nach Anspruch 1, dadurch gekennzeichnet, daß die Komponenten 1. und 2. sowie gegebenenfalls anwesende weitere Stoffe in Einwellenextrudern und Spritzgußmaschinen vermischt werden, wobei die gegebenenfalls anwesenden Zusatzstoffe auch schon in den Stoffen 1. und/oder 2. enthalten sein können.

7. Polyamide mit höherer rel. Lösungsviskosität als der der Ausgangspolyamide 1. und/oder verbesserten mechanischen Eigenschaften, hergestellt nach dem Verfahren der Ansprüche 1-6, insbesondere auf Einwellenextrudern.

8. Polyamide mit Molekulargewichten ($\overline{M}_n$) von mehr als 25.000 g mol$^{-1}$, hergestellt nach dem Verfahren der Ansprüche 1-6, insbesondere auf Einwellenextrudern.

9. Polyamide, hergestellt nach dem Verfahren der Ansprüche 1-6, enthaltend (bevorzugt) Füll-/Verstärkungsstoffe (Glasfasern, Glaskugeln, C-Fasern, Aramidfasern, mineralische Füllstoffe etc.) und/oder polymere Legierungspartner, wobei Ethylen-(gegebenenfalls neutralisierte)Säuremonomer-Copolymere ausgenommen sind, sowie gegebenenfalls Stabilisatoren, Farbstoffe/Pigmente, Nukleierungsmittel, Gleitmittel, Entformungsmittel, Flammschutzmittel, u.a.m. in Mengen von bis zu 150 Gew.-%, bezogen auf den PA-Anteil.

10. Verwendung der Polyamide nach Ansprüchen 7-9 zur Herstellung geformter, insbesondere gefüllter oder verstärkter oder schlagzähmodifizierter Formkörper, Folien, Fasern und Halbzeugen, nach Verfahren des Spritzgießens und der Extrusion.

Europäisches Patentamt

# EUROPÄISCHER RECHERCHENBERICHT

Nummer der Anmeldung: EP 92 10 0108

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 348 000 (STAMICARBON) | | C 08 L 77/00 // (C 08 L 77/00 C 08 L 35:00 ) |
| A | EP-A-0 331 975 (DENKI KAGAKU) | | |
| A | EP-A-0 276 988 (ASAHI KASEI) | | |
| A | EP-A-0 302 510 (BORG-WARNER) | | |

RECHERCHIERTE SACHGEBIETE (Int. Cl.5): C 08 L

Der vorliegende Recherchenbericht wurde für alle Patentansprüche erstellt

| Recherchenort | Abschlußdatum der Recherche | Prüfer |
|---|---|---|
| DEN HAAG | 21-04-1992 | LEROY ALAIN |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes Dokument